# EUROPÄISCHE PATENTANMELDUNG

(11) **EP 2 208 640 A1**
(43) Veröffentlichungstag der Anmeldung: **21.07.2010**
(21) Anmeldenummer: 09075017.5
(22) Anmeldetag: 14.01.2009
(51) Int. Cl.: B60R 1/072, B60R 1/066, B60H 1/34

(54) **Antrieb für ein zu verstellendes Bauteil**

(71) Anmelder: Magna Auteca AG, 8160 Weiz (AT)
(72) Erfinder: Schadler, Bernhard, A-8261 Sinabelkirchen (AT); Dornhofer, Hermann, A-8190 Birkfeld (AT)
(74) Vertreter: Pfenning, Meinig & Partner GbR

(57) **Zusammenfassung**

Es wird ein Antrieb für ein zu verstellendes Bauteil, insbesondere für einen verstellbaren Kraftfahrzeugspiegel, mit einem an einer feststehenden Struktur befestigbaren, eine Mittelachse aufweisenden Gehäuse zur Aufnahme von Antriebselementen und einem Träger für das Bauteil, der relativ zum Gehäuse über Mittel zur Lagerung bewegbar ist, vorgeschlagen. An dem Träger ist ein erstes Lagerelement mit teilzylindrischer Umfangsfläche angeformt ist und zwischen Gehäuse und erstem Lagerelement ist ein zweites Lagerelement mit teilzylindrischer Umfangsfläche angeordnet, die jeweils auf einer ersten und einer zweiten als Führung dienende Lagerfläche um zwei senkrecht zueinander stehende Drehachsen schwenkbar angeordnet sind. Die erste Lagerfläche ist an dem zweiten Lagerelement vorgesehen und die zweite Lagerfläche steht mit dem Gehäuse in Verbindung, und die Umfangsflächen der Lagerelemente bilden mit den Lagerflächen eine Doppel-Zylinderlageranordnung.

## Beschreibung

Die Erfindung betrifft einen Antrieb für ein zu verstellendes Bauteil, insbesondere für einen verstellbaren Kraftfahrzeugspiegel nach dem Oberbegriff des Hauptanspruchs.

Es ist eine Vielzahl von Antrieben für ein zu verstellendes Bauteil, insbesondere für den Kraftfahrzeugbereich, bekannt, wobei die relativ zu einer feststehenden Struktur zu verstellenden Bauteile Spiegel, Klappen für Lüftungen und Heizungen oder dergleichen sind.

Eine Antriebsvorrichtung für einen verstellbaren Rückblickspiegel ist beispielsweise aus der WO 98/31565 bekannt. Dabei ist ein fahrzeugfestes Antriebsgehäuse in Schalenform und aus Kunststoff vorgesehen, das Motoren und Getriebeelemente, wie Zahnräder oder Schnecken, aufnimmt. Das Gehäuse bildet mit seiner Außenfläche eine sphärische Führungsfläche für ein das Gehäuse umgreifende Außenschale, die mit einem Spiegelträger verbunden ist, der zur Verstellung des Rückblickspiegels um zwei gedachte Achsen schwenkbar ist und an dem ein Spiegelglas befestigt ist. In der das Gehäuse umgreifenden Außenschale ist mindestens eine Verzahnung, vorzugsweise zwei Verzahnungen vorgesehen, wobei von Elektromotoren über Getriebeelemente angetriebene Zahnräder das Gehäuse durchgreifen und zur Verstellung der mit dem Spiegelträger verbundenen umgreifenden Außenschale mit deren Verzahnungen in Eingriff treten. Bei einem solchen Antrieb ist die Trägerplatte über eine Lageranordnung in Bezug auf das Gehäuse schwenkbar. Dabei ist an der Trägerplatte ein kugelförmiger Ansatz und in dem Gehäuse eine teilkugelförmige Vertiefung vorgesehen und zwischen beiden ist eine Kugelschale angeordnet. Eine solche Kugel-Lageranordnung ist sehr toleranzempfindlich und bei nicht perfekter Zentrierung ist die Funktionsfähigkeit beeinträchtigt.

Ausgehend von dem bekannten Stand der Technik liegt der Erfindung die Aufgabe zugrunde, einen Antrieb für ein zu verstellendes Bauteil, insbesondere für einen verstellbaren Kraftfahrzeugspiegel zu schaffen, dessen Schwenklageranordnung zwischen Träger und Gehäuse eine geringe Toleranzempfindlichkeit aufweist und fertigungsbedingte Mittigkeitsfehler ausgleichen kann.

Diese Aufgabe wird erfindungsgemäß durch die kennzeichnenden Merkmale des Hauptanspruchs in Verbindung mit den Merkmalen des Oberbegriffs gelöst.

Durch die in den Unteransprüchen angegebenen Maßnahmen sind vorteilhafte Weiterbildungen und Verbesserungen möglich.

Dadurch, dass an dem Träger ein erstes Lagerelement mit teilzylindrischer Umfangsfläche angeformt ist und zwischen Gehäuse und erstem Lagerelement ein zweites Lagerelement mit teilzylindrischer Umfangsfläche angeordnet ist, die jeweils auf einer ersten und einer zweiten als Führung dienende Lagerfläche um zwei senkrecht zueinander stehende Drehachsen schwenkbar angeordnet sind, wobei die erste Lagerfläche an dem zweiten Lagerelement vorgesehen ist und die zweite Lagerfläche mit dem Gehäuse in Verbindung steht, bilden die Umfangsflächen der Lagerelemente mit den Lagerflächen eine verdrehsichere Doppelzylinderlageranordnung, die wenig toleranzempfindlich ist, da es möglich wird, fertigungsbedingte Mittigkeitsfehler auszugleichen. Somit kann ein gleichmäßiger Kontakt zwischen der Außenfläche des Gehäuses und der Innenfläche des ringschalenförmigen umgreifenden Elements entstehen.

Vorzugsweise sind die Lagerflächen als rinnenförmige Vertiefungen ausgebildet, die von gekrümmten oder prismenförmigen Flächen begrenzt werden, wobei in bevorzugter Weise der Kontakt zwischen Lagerelementen und Lagerflächen linienförmig ist. Ein besonders vorteilhaftes Ausführungsbeispiel ist eine Lageranordnung mit doppelter Zylinder-Prismaführung, bei der die jeweiligen teilzylindrischen Umfangsflächen der Lagerelemente auf den prismatischen Flächen linienförmige Abstützung haben.

Das Gehäuse besteht vorteilhafterweise aus einem schalenförmigen Untergehäuse, dessen Außenfläche die Kontaktfläche mit einem ringförmigen, eine Teilschale bildenden umgreifenden Element darstellt, und einem deckelartigen Obergehäuse zwischen welchen und dem mit dem umgreifenden Element verbundenen Träger die Doppel-Zylinder-Lageranordnung vorgesehen ist. Dadurch wird eine einfache Konstruktion zur Verfügung gestellt.

Vorteilhafterweise sind um die Mittelachse herum Mittel zur elastischen Vorspannung zwischen Gehäuse und umgreifendem Element vorgesehen, die ein an dem Gehäuse angeordnetes Ausgleichselement aufweisen, wobei das Ausgleichselement unter der Wirkung von einer Federkraft axial zur Ausübung eines Drucks auf den Träger und damit auf das das Gehäuse umgreifende Element bewegbar ist, wodurch ein konstantes Reibmoment über die Lebensdauer des Antriebs zur Verfügung gestellt werden kann, da das durch eine mögliche Relaxation des Kunststoffs auftretende Spiel durch Verschiebung des Ausgleichselements und damit durch axiale Verschiebung des Trägers zusammen mit dem umgreifenden Element ausgeglichen wird. Da die Federkraft axial wirkt, ergibt sich eine definierte und gleichmäßige Reibung zwischen Gehäuse und übergreifendem Element. Dabei ist an dem Ausgleichselement die zweite Lagerfläche angeordnet, so dass die Federwirkung auch auf die Lageranordnung ausgeübt wird, wodurch sie spielfrei gehalten wird.

Zur Ausübung der Federkraft ist vorteilhafterweise zwischen Ausgleichselement und Gehäuse mindestens eine axial zur Mittelachse des Gehäuses wirkende Feder angeordnet, vorzugsweise sind zwei Federn vorgesehen, die wiederum bevorzugt als Spiralfedern ausgebildet sind. Es kann aber auch nur eine Spiralfeder koaxial zur Hülse angeordnet sein. Durch eine derartige Anordnung kann die axiale Kraft, die das umgreifende Element mit dem Spiegelträger in der Zeichnung gesehen nach oben drückt, in einfacher Weise erzeugt werden.

In einem bevorzugten Ausführungsbeispiel sind die Federn, vorzugsweise die Spiralfedern symmetrisch zur Mittelachse angeordnet und ebenfalls vorzugsweise sind an dem Ausgleichselement Stifte für die Zentrierung der Federn angeformt. Durch diese Mittel werden einerseits die Kräfte gleichmäßig auf die Ausgleichsplatte gerichtet und die Federn werden sauber axial geführt, so dass keine Verkantung zwischen dem Gehäuse und dem umgreifenden Element auftreten und die definierte Reibung zwischen den besagten Teilen gewährleistet.

Das Ausgleichselement kann plattenförmig ausgebildet sein, mit den angeformten Stiften zur Zentrierung der Federn, wobei vorzugsweise das plattenförmige Element zur Bildung der Lagerfläche gekrümmt ist oder zumindest zwei prismaähnliche Flächen aufweist.

Die Lagerelemente und die vorzugsweise am Ausgleichselement ausgebildete zweite Lagerfläche sind um die Mittelachse herum mit Öffnungen für den Durchgriff einer stiftartigen Hülse versehen, die zur Durchführung eines Befestigungselements im Gehäuse angeordnet ist. Die Hülse weist einen tellerartigen Ansatz zur Abstützung am Boden des Gehäuses aufweist, wobei der tellerfederartige Ansatz ein Mittel zur gleichmäßigen Verteilung der von dem Befestigungselement zur Befestigung an der feststehenden Struktur hervorgerufenen Verspannkraft bildet, wird die nach dem Verschrauben des Antriebs mit der feststehenden Struktur entstehende Verspannkraft auf die Innenseite bzw. den Boden des Gehäuses verteilt und damit auf die Auflagepunkte. Dadurch wird eine sichere und gleichmäßige Abstützung des Antriebs über die Lebensdauer erreicht.

Dadurch, dass vorteilhafterweise am Boden des Gehäuses eine ins Innere desselben weisende Erhöhung angeformt ist, die von dem tellerfederartigen Ansatz übergriffen wird, wird letzterer zusätzlich fixiert und die unter dem Ansatz ohne die Erhöhung vorhandene Luft wird zusätzlich eliminiert, wodurch die Krafteinleitung in den Boden und in mindestens drei Auflageansätze als Abstützpunkte an der feststehenden Struktur verbessert wird.

In einem bevorzugten Ausführungsbeispiel ist mindestens ein am Obergehäuse angeformter Ansatz vorgesehen, der zur Verbesserung der Positionierung einen Anschlag zum Niederhalten des tellerfederartigen Ansatzes bildet.

Ein Ausführungsbeispiel der Erfindung ist in der Zeichnung dargestellt und wird in der nachfolgenden Beschreibung näher erläutert. Es zeigen
- Fig. 1: einen Schnitt durch den erfindungsgemäßen Antrieb und
- Fig. 2: eine schematische Darstellung der bei dem erfindungsgemäßen Ausführungsbeispiel verwendeten Drehlagerung mit Verdrehsicherung und doppelter Zylinder-Prismaführung.

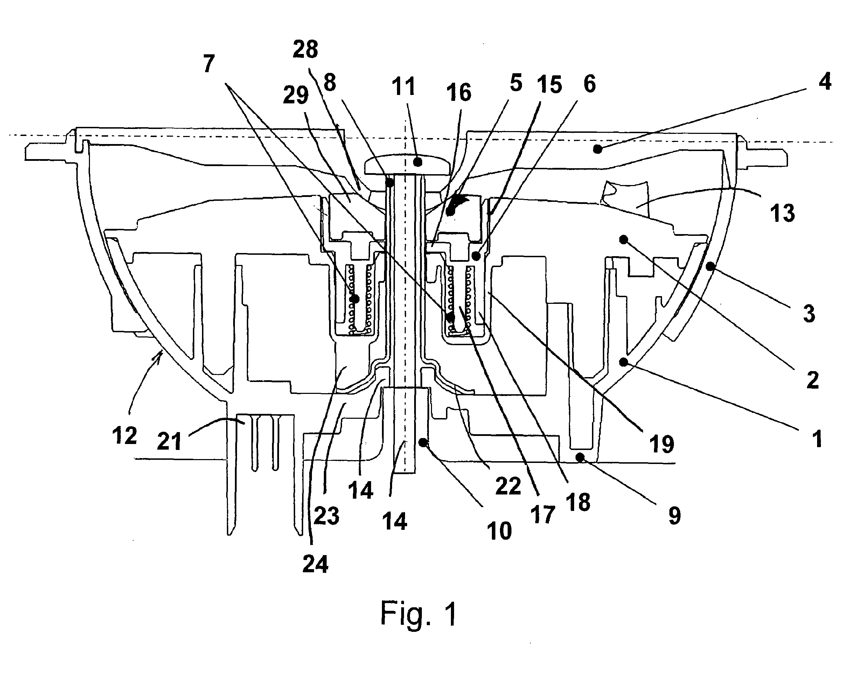

Der in Fig. 1 dargestellte Antrieb entsprechend der Erfindung weist ein schalenförmiges Untergehäuse 1 und ein mit dem Untergehäuse 1 beispielsweise über Rast- und/oder Clipverbindungen verbundenes Obergehäuse auf, das das Untergehäuse deckelartig abschließt. In dem so gebildeten Gehäuse 12 sind Antriebselemente untergebracht, wie z.B. Elektromotoren, Getriebeschnecken und Zahnräder.

Das schalenförmige Gehäuse 12 aus Untergehäuse 1 und Obergehäuse 2 wird von einer ringförmigen Antriebsschale 3 übergriffen, die mit einer Trägerplatte 4 verbunden ist, wobei die Verbindungen wiederum Rast- und Schnappverbindungen sein können. Unter ringförmiger Antriebsschale wird verstanden, dass das Untergehäuse 1 nur bereichsweise übergriffen wird, wie aus Fig. 1 gut zu erkennen ist. Die Innenfläche der Antriebsschale 3 gleitet auf der Außenfläche des schalenförmigen Untergehäuses 1, wodurch die Trägerplatte 4 geschwenkt wird. An der Träger- oder Adapterplatte 4 wird im bevorzugten Ausführungsbeispiel ein Spiegelelement eines Rückblickspiegels für Kraftfahrzeuge befestigt.

Auf der Innenseite der Antriebsschale 3 ist im dargestellten Ausführungsbeispiele eine Verzahnung 13 angedeutet, die mit einem nicht dargestellten Antriebszahnrad in Eingriff steht, das das Untergehäuse 1 durchgreift und über Getriebeelemente von einem Elektromotor (nicht dargestellt) angetrieben wird. Eine weitere Verzahnung 13 ist etwa 90° zu der dargestellten Verzahnung 13 angeordnet und steht mit einem nicht dargestellten weiteren Antriebszahnrad in Verbindung. Dadurch lässt sich die Trägerplatte 4 in alle Richtungen schwenken.

In dem Obergehäuse 2 ist um eine Mittelachse 14 des Antriebs herum eine Vertiefung 15 mit Hohlansätzen vorgesehen, in die ein weiter unten beschriebenes Ausgleichselement 6 eingesetzt ist.

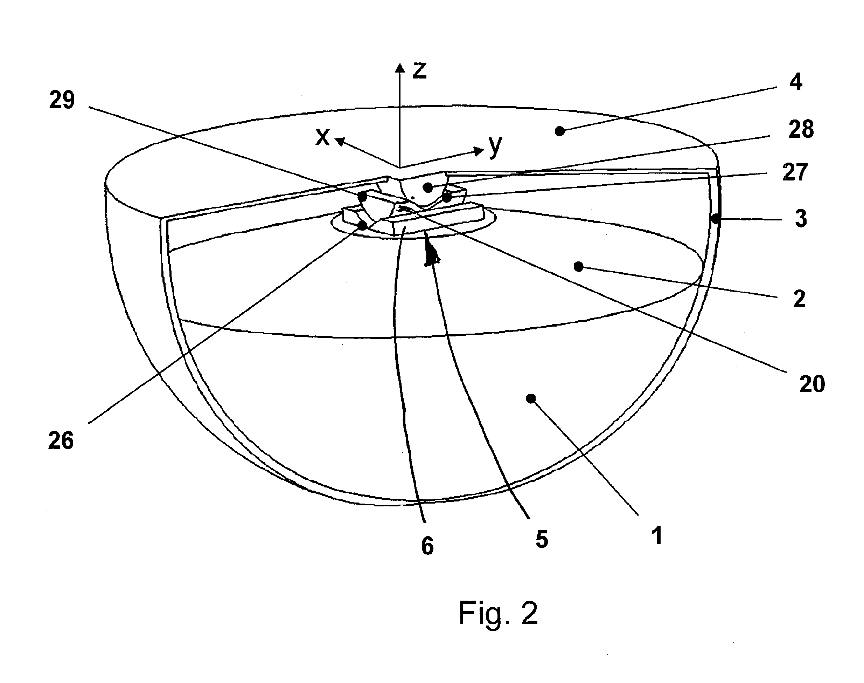

Zwischen Gehäuse 12 und Träger 4 ist eine Lageranordnung 5 eingesetzt, die ein Verschwenken des Trägers mit Antriebsschale 3 gestattet. Die Drehachse des Antriebs, beispielsweise eines Spiegelverstellantriebs, wird durch die Teilkugelfläche an der Antriebsschale 3 und durch die Kugelfläche am Untergehäuse bestimmt. Dabei schwenkt die Antriebsschale 3 mit Trägerplatte 4 um die Lagerung 5 mit Verdrehsicherung, die mit Hilfe von Fig. 2 näher erläutert wird. In dieser Fig. 2 sind das Untergehäuse 1 und das Obergehäuse 2 sowie die Antriebsschale 3 mit der Trägerplatte 4 schematisch dargestellt und dienen in dieser Form der Erläuterung der Lagerung 5. Ein Koordinatensystem ist in bekannter Weise mit x, y und z bezeichnet.

An der Trägerplatte 4 ist ein Teilzylinder 28 als erstes Lagerelement angeformt, wie er im Schnitt auch in Fig. 1 zu erkennen ist. Dieser Teilzylinder 28 wird von einem ein zweites Lagerelement bildenden Zwischenelement 20 aufgenommen, das auf der dem Teilzylinder 28 zugewandten Seite eine Führung, im vorliegenden Fall eine Prismaführung 27 als erste Lagerfläche, bestehend aus zwei Schrägen, aufweist. Ein Ausgleichselement 6, das weiter unten beschrieben wird und von dem hier schematisch ein Teil des Oberteils zu sehen ist, weist gleichfalls eine Prismaführung 26 aus zwei schrägen Flächen als zweite Lagerfläche auf, auf denen DAS Zwischenelement 20 aufliegt. Dieses Zwischenelement 20 ist auf der dem Ausgleichselement 6 zugewandten Seite mit einer Teilzylinderfläche 29 versehen, die auch in einzelnen Kufen, wie in Fig. 1 dargestellt, ausgebildet sein kann.

Aufgrund der beschriebenen Anordnung der Lagerung 5 können bei fertigungsbedingten Mittigkeitsfehlern, d.h. bei einer Nichtzentrizität, das Zwischenlagerelement 20 eine lineare Bewegung in y-Richtung vornehmen und der Zylinder 28 in der Prismenführung 27 eine lineare Bewegung in x-Richtung ausführen. Auf diese Weise findet ein Toleranzausgleich statt. Durch die doppelte Zylinder-Prismaführung 26, 27, 28, 29 findet beim Schwenken der Antriebsschale 3 und der Trägerplatte 4 um die x-Achse und die y-Achse jeweils eine Linienberührung zwischen den schrägen Flächen der Prismenführungen 26 und 27 und den zugeordneten Teilzylindern 28 und 29 statt.

Wie in Fig. 1 dargestellt, umfasst das in die Vertiefung 15 des Obergehäuses 2 eingesetztes Ausgleichselement 6 umfasst ein plattenförmiges Teil 16, an das zwei in die Vertiefung 15 hineinragende Stifte 17 und zwei Führungen 18 angeformt sind. Das plattenförmige Oberteil 16 und auch die Vertiefung 15 haben einen viereckigen Umriss. Die Vertiefung 15 setzt sich in den angeformten Hohlansätzen 19 fort, die zur Aufnahme der Stifte 17 und der Führungen 18 dienen. Zwischen dem Boden dieser Hohlansätze 19 und dem plattenförmigen Oberteil 16 des Ausgleichselements 6 sind um die Stifte 17 herum Spiralfedern 7 unter Vorspannung eingesetzt. Diese Federn 7 drücken somit das Ausgleichselement 6 in der Fig. 1 nach oben.

Wie in Fig. 1 zu erkennen ist, wird der Antrieb an einer feststehenden Struktur 10, beispielsweise einem mit dem Kraftfahrzeug verbundenen Teil eines Spiegelträgerteils, befestigt, wobei eine Steckbuchse 21 des Antriebs mit einem entsprechenden Stecker einer elektrischen Leitung verbunden wird. Üblicherweise wird der Antrieb mittels einer Befestigungsschraube 11 mit der feststehenden Struktur 10 verschraubt, derart, dass das Untergehäuse 1 mit durch Ansätze 9 vorgegebenen Auflagepunkten sich an der feststehenden Struktur 10 abstützt. Um eine sichere Abstützung des Antriebs über die gesamte Lebensdauer zu erreichen, ist, wie aus Fig. 1 zu erkennen ist, eine Hülse 8 in dem Gehäuse 12 um die Mittelachse 14 herum aufgenommen. Die Hülse 8 weist an einem Ende einen tellerfederartigen Ansatz 22 auf, der sich am Boden 23 des Untergehäuses 1 abstützt, wobei dieser Boden 23 eine nach innen gezogene Erhöhung 24 aufweist, die in den tellerfederartigen Ansatz 22 eingreift. Eine Verlängerung 25 des Hohlansatzes 19 drückt dabei von oben (entsprechend Fig. 1) auf den Teller 22. Die Hülse 8 durchgreift die Teile der Lagerung 5 und ragt in eine Vertiefung der Trägerplatte 4 hinein, die ausgebildet ist, um das Schwenken der Trägerplatte 4 zusammen mit der Antriebsschale 3 zuzulassen. Zum Einschrauben der Befestigungsschraube 11 in die feststehende Struktur 10 wird die Schraube 11 durch die Hülse 8 geführt und beim Festziehen wird der tellerförmige Ansatz gegen den Boden 23 und die Erhöhung 24 gedrückt, so dass im Wesentlichen die Luft zwischen diesen Teilen eliminiert und der Boden unter Spannung gehalten wird. Dadurch wird die Vorspannkraft auf die Auflageansätze 9 verteilt, so dass die Schraube sich auch über die Lebensdauer nicht lockern kann und der Antrieb fest auf der feststehenden Struktur sitzt.

Wenn im Laufe der Lebensdauer des Antriebs der Kunststoff einer Relaxation unterliegt, durch die ein Spiel zwischen dem Untergehäuse 1, d.h. zwischen seiner äußeren Kugelfläche und der Antriebsschale 3, d.h. ihrer inneren Kugelfläche, auftreten könnte, drücken die Spiralfedern 7 das Ausgleichselement 6 in der Fig. 1 nach oben, wodurch auch die Teile der Lagerung 5 und damit die Trägerplatte 4 zusammen mit der Antriebsschale nach oben gedrückt werden, so dass die Antriebsschale 3 immer an dem Untergehäuse 1 anliegt und sich eine definierte Reibung zwischen Untergehäuse 1 und Antriebsschale 3 ergibt. Durch die axiale Federkraft der Spiralfedern 7 und dem Ausgleichselement 6 wird somit die Antriebsschale 3 gleichmäßig über den gesamten Umfang gegen das untere Gehäuse 1 spielfrei gehalten.

## Patentansprüche

1. Antrieb für ein zu verstellendes Bauteil, insbesondere für einen verstellbaren Kraftfahrzeugspiegel, mit einem an einer feststehenden Struktur befestigbaren, eine Mittelachse aufweisenden Gehäuse (12) zur Aufnahme von Antriebselementen und einem Träger für das Bauteil, der relativ zum Gehäuse über Mittel zur Lagerung bewegbar ist,
**dadurch gekennzeichnet, dass**
an dem Träger (4) ein erstes Lagerelement (28) mit teilzylindrischer Umfangsfläche angeformt ist und zwischen Gehäuse (12) und erstem Lagerelement (28) ein zweites Lagerelement (20) mit teilzylindrischer Umfangsfläche angeordnet ist, die jeweils auf einer ersten (27) und einer zweiten (26) als Führung dienende Lagerfläche um zwei senkrecht zueinander stehende Drehachsen schwenkbar angeordnet sind, wobei die erste Lagerfläche (27) an dem zweiten Lagerelement (20) vorgesehen ist und die zweite Lagerfläche (26) mit dem Gehäuse (12) in Verbindung steht,
und die Umfangsflächen der Lagerelemente (28, 20) mit den Lagerflächen (27, 26) eine Doppel-Zylinderlageranordnung bilden.

2. Antrieb nach Anspruch 1, **dadurch gekennzeichnet, dass** die Lagerflächen (27, 26) an einer rinnenförmigen Vertiefung ausgebildet und gekrümmt und/oder prismenförmig sind.

3. Antrieb nach Anspruch 1 oder Anspruch 2, **dadurch gekennzeichnet, dass** die Lagerflächen (26, 27) derart ausgebildet sind, dass der Kontakt zwischen den teilzylinderförmigen Umfangsflächen und den Lagerflächen linienförmig ist.

4. Antrieb nach einem der Ansprüche 1 bis 3, **dadurch gekennzeichnet, dass** das Gehäuse (12) aus einem schalenförmigen Untergehäuse (1) und einem deckelartigen Obergehäuse (2) besteht und dass der Träger (4) mit einem das Gehäuse (12) zumindest teilweise umgreifenden Element (3) verbunden ist.

5. Antrieb nach einem der Ansprüche 1 bis 4, **dadurch gekennzeichnet, dass** zwischen Gehäuse (12) und Träger (4) und einem mit diesem verbundenen, das Gehäuse zumindest teilweise umgreifenden Element (3) Mittel zur elastischen Vorspannung angeformt sind, die ein an dem Gehäuse (12) angeordnetes Ausgleichselement (6) umfassen, das unter der Wirkung einer Federkraft axial zur Ausübung eines Drucks auf dem Träger (4) bewegbar ist.

6. Antrieb nach einem der Ansprüche 1 bis 4 und Anspruch 5, **dadurch gekennzeichnet, dass** die zweite Lagerfläche (26) an dem Ausgleichselement (6) ausgebildet ist.

7. Antrieb nach Anspruch 5 oder Anspruch 6, **dadurch gekennzeichnet, dass** das Ausgleichselement (6) um die Mittelachse herum, vorzugsweise in einer Vertiefung des Obergehäuses angeordnet ist.

8. Antrieb nach einem der Ansprüche 5 bis 7, **dadurch gekennzeichnet, dass** zwischen Ausgleichselement (6) und Gehäuse (12) mindestens eine axial zur Mittelachse wirkende Feder (7), vorzugsweise Spiralfeder, angeordnet ist.

9. Antrieb nach einem der Ansprüche 5 bis 8, **dadurch gekennzeichnet, dass** mindestens zwei Federn (7), vorzugsweise Spiralfedern, symmetrisch zur Mittelachse (14) vorgesehen sind, wobei vorzugsweise an dem Ausgleichselement (6) Stifte (17) für die Zentrierung der Federn (7) angeordnet sind.

10. Antrieb nach einem der Ansprüche 1 bis 9, **dadurch gekennzeichnet, dass** das erste (28) und zweite Lagerelement (20) und die vorzugsweise an dem Ausgleichselement (6) ausgebildete zweite Lagerfläche (26) um die Mittelachse (15) herum Öffnungen für den Durchgriff einer stiftartigen Hülse (8) zur Aufnahme eines Befestigungselements (11) für die Befestigung an der feststehenden Struktur aufweist.

11. Antrieb nach Anspruch 10, **dadurch gekennzeichnet, dass** die Hülse (8) an ihrem der Doppel-Zylinder-Lageranordnung abgewandten Ende einen tellerfederartigen Ansatz (8) zur Abstützung am Boden (23) des Gehäuses (12) und zur gleichmäßigen Verteilung der von dem Befestigungselement hervorgerufenen Verspannkraft aufweist.

12. Antrieb nach Anspruch 11, **dadurch gekennzeichnet, dass** am Boden (23) des Gehäuses eine ins Innere des Gehäuses weisende Erhöhung (24) angeformt ist, die von dem tellerfederartigen Ansatz (22) übergriffen wird.
